# EUROPEAN PATENT APPLICATION

(11) **EP 4 592 325 A1**
(43) Date of publication of application: **30.07.2025**
(21) Application number: 22964115.4
(22) Date of filing: 04.11.2022
(51) Int. Cl.: C08F 214/18, C08F 214/22, C08F 220/06, H01M 4/62, H01M 10/0525

(54) **FLUOROPOLYMER, CONDUCTIVE PASTE, POSITIVE ELECTRODE PIECE, SECONDARY BATTERY AND ELECTRICAL APPARATUS**

(71) Applicant: Contemporary Amperex Technology (Hong Kong) Limited, Central (HK)
(72) Inventor: FENG, Wei, Ningde, Fujian 352100 (CN); LIU, Huihui, Ningde, Fujian 352100 (CN); OUYANG, Chuying, Ningde, Fujian 352100 (CN); SUN, Chengdong, Ningde, Fujian 352100 (CN); ZHANG, Shuai, Ningde, Fujian 352100 (CN); ZUO, Huanhuan, Ningde, Fujian 352100 (CN); ZHANG, Wenshuai, Ningde, Fujian 352100 (CN)
(74) Representative: Behr, Wolfgang
(86) International application number: PCT/CN2022/130117
(87) International publication number: WO 2024/092813

(57) **Abstract**

The present application provides a fluoropolymer, a conductive slurry, a positive electrode plate, a secondary battery, and an electrical apparatus. The fluoropolymer comprises a structural unit derived from a monomer represented by formula I and a structural unit derived from a monomer represented by formula II, wherein R₁, R₂ and R₃ are each independently selected from one or more of hydrogen, fluorine, chlorine and fluorine-substituted C₁₋₃ alkyl; R₄ and R₅ are selected from hydrogen, substituted or unsubstituted C₁₋₅ alkyl; and R₆ is selected from one or more of aryl-substituted C₁₋₅ alkyl, substituted or unsubstituted aryl. The fluoropolymer can improve the filterability, anti-gelling property and storage performance of the conductive slurry, thus significantly broadening a process window of the conductive slurry and improving processability of the conductive slurry.

## Description

### TECHNICAL FIELD

The present application relates to the technical field of secondary batteries, and in particular to a fluoropolymer, a conductive slurry, a positive electrode plate, a secondary battery, and an electrical apparatus.

### BACKGROUND

Due to poor conductivity of active materials of secondary batteries, it is easy to have problems such as large internal resistance and poor rate performance and cycling performance in the battery production process, so it is necessary to improve the conductivity of the active materials by adding conductive agents to improve comprehensive performance of the batteries. However, existing conductive agents usually have large specific surface area, which are prone to agglomeration under action of Van der Waals forces to affect their conductivity, and tend to lead to uneven distribution of positive electrode plates, affecting performance of the active materials. Therefore, it is urgent to solve this technical problem.

### SUMMARY OF THE INVENTION

The present application is made in view of the foregoing subject matter, and it is intended to provide a fluoropolymer and a conductive slurry containing the fluoropolymer to improve dispersity of a conductive agent so as to optimize performance of a battery.

A first aspect of the present application provides a fluoropolymer, containing a structural unit derived from a monomer represented by formula I and a structural unit derived from a monomer represented by formula II, 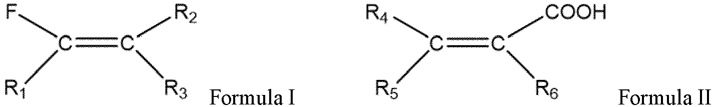 wherein R₁, R₂ and R₃ are each independently selected from one or more of hydrogen, fluorine, chlorine and fluorine-substituted C₁₋₃ alkyl; R₄ and R₅ are each independently selected from one or more of hydrogen, substituted or unsubstituted C₁₋₅ alkyl; and R₆ is selected from one or more of aryl-substituted C₁₋₅ alkyl, substituted or substituted aryl.

The fluoropolymer provided in the present application can reduce viscosity of the conductive slurry, improve filterability of the conductive slurry, and improve anti-gelling property and storage performance of the conductive slurry as the slurry will not be gelled after 60 days of storage, thus improving processability and stability of the conductive slurry, enabling the conductive slurry to meet production requirements without the need of adding a dispersant, and further reducing film resistance of an electrode plate and direct current impedance of a battery.

In any of embodiments, R₁ in the formula I is fluorine, and R₂ and R₃ are each independently selected from one or more of hydrogen, fluorine, chlorine and trifluoromethyl.

In any of embodiments, the structural unit derived from the monomer represented by the formula I has a molar content of 50% to 70% based on the total mole number of all structural units in the fluoropolymer.

By controlling the molar content of the structural unit derived from the monomer represented by the formula I within a suitable range, both the viscosity of the conductive slurry and the adhesion of the electrode plate can be taken into account, thus comprehensively improving the processing performance and use performance of the conductive slurry.

In any of embodiments, the structural unit derived from the monomer represented by the formula II has a molar content of 30% to 50% based on the total mole number of all structural units in the fluoropolymer.

By controlling the molar content of the structural unit derived from the monomer represented by the formula II within a suitable range, both the viscosity of the conductive slurry and the adhesion of the electrode plate can be taken into account, thus comprehensively improving the processing performance and use performance of the conductive slurry.

In any of embodiments, the fluoropolymer has a weight average molecular weight of 100,000 to 140,000.

By controlling the weight average molecular weight of the fluoropolymer within a suitable range, both the viscosity of the conductive slurry and the adhesion of the electrode plate can be taken into account, thus comprehensively improving the processing performance and use performance of the conductive slurry.

In any of embodiments, the monomer represented by the formula I is selected from one or more of vinyl fluoride, vinylidene fluoride, tetrafluoroethylene, trifluoro chloroethylene, and hexafluoropropylene.

In any of embodiments, the monomer represented by formula II is selected from one or more of 2-benzylacrylic acid, 2-(4-isobutylbenzyl)acrylic acid, 2-methylene-4-phenylbutyric acid, and 2-(1-phenylethyl)acrylic acid.

A third aspect of the present application provides a preparation method of a fluoropolymer, the preparation method including the following steps:
performing a polymerization reaction of at least one monomer represented by formula I with at least one monomer represented by formula II in polymerizable conditions, 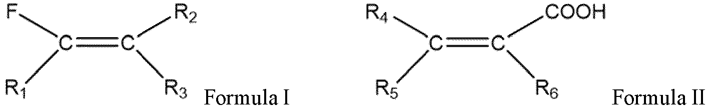
wherein R₁, R₂ and R₃ are each independently selected from one or more of hydrogen, fluorine, chlorine and fluorine-substituted C₁₋₃ alkyl; R₄ and R₅ are each independently selected from one or more of hydrogen, substituted or unsubstituted C₁₋₅ alkyl; and R₆ is selected from one or more of aryl-substituted C₁₋₅ alkyl, substituted or substituted aryl.

Compared with a conventional binder, the fluoropolymer prepared by the method can reduce viscosity of the conductive slurry, improve filterability of the conductive slurry, and improve anti-gelling property and storage performance of the conductive slurry as the slurry will not be gelled after 60 days of storage, thus improving anti-gelling property and storage performance of the conductive slurry, broadening a process window of the conductive slurry greatly, improving processability of the conductive slurry, enabling the conductive slurry to meet production requirements without the need of adding a dispersant, and further reducing film resistance of the electrode plate and direct current impedance of the battery.

In any of embodiments, R₁ in the formula I is fluorine, and R₂ and R₃ are each independently selected from one or more of hydrogen, fluorine, chlorine and trifluoromethyl.

In any of embodiments, the structural unit represented by the formula I has a molar content of 50% to 70% based on the total mole number of the structural unit represented by the formula I and the structural unit represented by the formula II.

n any of embodiments, the structural unit represented by the formula II has a molar content of 30% to 50% based on the total mole number of the structural unit represented by the formula I and the structural unit represented by the formula II.

In any of embodiments, the polymerization reaction includes a first stage of polymerization and a second stage of polymerization,
the first stage of polymerization: adding an initiator, an emulsifier, at least one monomer represented by the formula I and an aqueous medium into a reaction vessel for the first stage of polymerization, and continuously feeding the monomer represented by the formula I in the first stage of polymerization; and
the second stage of polymerization: after reacting for a period of time, adding at least one monomer represented by the formula II into the reaction vessel for the second stage of polymerization, and continuously feeding the monomer represented by the formula I in the second stage of polymerization.

In the method of the present application, the monomer represented by the formula I is fed continuously first to form a fluorine-containing chain segment so that the fluoropolymer has high thermal stability; and then the monomer represented by the formula II is fed to reduce the contact between the fluorine-containing chain segment and the external environment, so that the gelling phenomenon caused by fluorine elements is alleviated effectively. Compared with a fluoropolymer prepared by a method of feeding all monomers into the reaction vessel to perform polymerization simultaneously, the fluoropolymer prepared by this method can effectively improve stability of the conductive slurry, improve anti-settling property of the slurry, improve adhesion of the electrode plate, reduce film resistance of the electrode plate and direct current internal resistance of the battery, and improve kinetic performance of the battery. In addition, when the monomer represented by the formula II is fed into the reaction vessel for the second stage of polymerization, the monomer represented by the formula I is continued to be fed into the reaction vessel, which is conducive to improving compatibility of the chain segment generated in the first stage of polymerization with the chain segment generated in the second stage of polymerization, thus improving stability of the fluoropolymer.

In any of embodiments, the mass of the monomer represented by the formula I fed in the first stage of polymerization is 80% to 85% of the total mass of the monomer represented by the formula I fed in the polymerization reaction, and the mass of the monomer represented by the formula I fed in the second stage of polymerization is 15% to 20% of the total mass of the monomer represented by the formula I fed in the polymerization reaction.

In any of embodiments, the initiator has a mass percentage of 0.5% to 1.4% based on the total mass of the monomer represented by the formula I and the monomer represented by the formula II.

In any of embodiments, the emulsifier has a mass percentage of 0.1% to 0.4% based on the total mass of the monomer represented by the formula I and the monomer represented by the formula II.

In any of embodiments, the aqueous medium provided in the first stage of polymerization has a mass percentage of 400% to 600% based on the total mass of the monomer represented by the formula I and the monomer represented by the formula II.

In any of embodiments, both the first stage of polymerization and the second stage of polymerization have a reaction pressure of 6.0 MPa to 9.0 MPa and a reaction temperature of 80°C to 120°C.

In any of embodiments, the emulsifier is alkali metal salt of perfluorooctanoic acid.

In any of embodiments, the initiator is N,N dimethylbenzylamine.

A third aspect of the present application provides an application of the fluoropolymer of the first aspect in a secondary battery.

A fourth aspect of the present application provides a conductive slurry, containing a conductive agent, a solvent and the fluoropolymer of the first aspect.

Compared with the way of directly adding a conductive agent during preparation of a positive electrode slurry in the existing technology, the conductive slurry of the present application can improve dispersity of the conductive agent in the positive electrode slurry and improve the conductive effect of the conductive agent in the electrode plate, thereby effectively reducing content of the conductive agent in the electrode plate, further increasing load of the positive electrode active material in the electrode plate and improving power performance of the battery.

In any of embodiments, the conductive agent has a mass fraction of 10.0% to 15.0% based on the total mass of the conductive slurry.

The mass fraction of the conductive agent is controlled within a suitable range, based on the total mass of the conductive slurry. The slurry with an appropriate viscosity enables the electrode plate to have good adhesion, and the processing performance and use performance of the slurry are improved comprehensively.

In any of embodiments, the fluoropolymer has a mass fraction of 0.5% to 2.5% based on the total mass of the conductive slurry.

The mass fraction of the fluoropolymer is controlled within a suitable range, based on the total mass of the conductive slurry. The slurry has an appropriate viscosity, so that the electrode plate has good adhesion, and the processing performance and use performance of the slurry are improved comprehensively.

In any of embodiments, the conductive slurry has a solid content of 10.5% to 17.5% and a viscosity of 300 mPa·s to 900 mPa·s.

With the solid content of 10.5% to 17.5% and the viscosity of 300 mPa·s to 900 mPa·s, the conductive slurry can be directly mixed and stirred with the active material and the binder to prepare the positive electrode slurry without adding other additives, which is conducive to improving production efficiency and reducing production cost.

A fifth aspect of the present application provides a positive electrode plate, comprising a positive electrode current collector and a positive electrode film layer provided on at least one surface of the positive electrode current collector, where the positive electrode film layer comprises a positive electrode active material, a conductive agent and a binder, and the conductive agent is a deposit of the conductive slurry of the fourth aspect.

Compared with a positive electrode plate prepared by directly adding conductive agent powder in the existing technology, the positive electrode plate disclosed in the present application has the advantages that the conductive agent therein exists in the form of a deposit of the conductive slurry in the positive electrode plate, so that the positive electrode plate may have low film resistance when a small amount of conductive agent is added, which provides a possibility of further increasing the load of the positive electrode active material in the electrode plate.

In any of embodiments, the film resistance of the positive electrode plate is less than 0.2 Ω when the mass content of the conductive agent is 0.5% to 0.8% based on the total mass of the positive electrode film layer.

In any of embodiments, the adhesion force per unit length between the positive electrode film layer and the positive electrode current collector is not less than 14 N/m.

A sixth aspect of the present application provides a secondary battery, including a separator, a negative electrode plate, an electrolyte solution and the negative electrode plate described in the fifth aspect. Optionally, the secondary battery includes at least one of a lithium ion battery, a sodium ion battery, a magnesium ion battery, and a potassium ion battery.

A seventh aspect of the present application provides a battery module including the secondary battery of the sixth aspect of the present application.

An eighth aspect of the present application provides a battery pack, including the secondary battery of the sixth aspect of the present application or the battery module of the seventh aspect of the present application.

A ninth aspect of the present application provides an electrical apparatus including at least one selected from the secondary battery of the sixth aspect of the present application, the battery module of the seventh aspect of the present application, or the battery pack of the eighth aspect of the present application.

### BRIEF DESCRIPTION OF THE DRAWINGS

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic view of an electrical apparatus in which a secondary battery is used as a power source according to an embodiment of the present application.

Description of reference numerals:
1, battery pack; 2, upper box; 3, lower box; 4, battery module; 5, secondary battery; 51, case; 52, electrode assembly; 53, cover plate.

### DETAILED DESCRIPTION

Hereinafter, embodiments of the binder, preparation method, electrode plate, battery, and electrical apparatus of the present application are described in detail and specifically disclosed with reference to the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Due to poor conductivity of active materials of secondary batteries, it is easy to have problems such as large internal resistance and poor rate performance and cycling performance in the battery production process, so it is necessary to improve the conductivity of the active materials by adding conductive agents to improve comprehensive performance of the batteries. However, the existing conductive agents usually have large specific surface area, which are prone to agglomeration under action of Van der Waals forces to affect their conductivity. The applicant has found that the way of preparing a conductive slurry from a conductive agent first and then mixing the conductive slurry with an active material and/or a binder to prepare the slurry helps to slow down the agglomeration of the conductive agent during the slurry mixing process, but a dispersant needs to be added into the conductive slurry to improve dispersity and stability of the conductive slurry. The addition of the dispersant in the conductive slurry will affect the electrochemical performance, cycle performance and batch stability of the battery, and it is also easy to result in incompatibility between the dispersant and a positive electrode slurry system. Based on the above technical problems, the present application proposes a fluoropolymer, which can improve filterability, anti-gelling property and storage performance of the conductive slurry, thus significantly broadening a process window of the conductive slurry and improving processability of the conductive slurry.

### [Fluoropolymer]

Based on this, the present application provides a fluoropolymer, containing a structural unit derived from a monomer represented by formula I and a structural unit derived from a monomer represented by formula II, 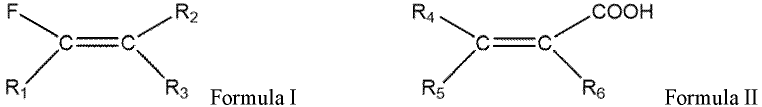 wherein R₁, R₂ and R₃ are each independently selected from one or more of hydrogen, fluorine, chlorine and fluorine-substituted C₁₋₃ alkyl; R₄ and R₅ are each independently selected from one or more of hydrogen, substituted or unsubstituted C₁₋₅ alkyl; and R₆ is selected from one or more of aryl-substituted C₁₋₅ alkyl, substituted or substituted aryl.

As used herein, the term "fluoropolymer" refers to a polymer containing fluorine elements in its structural units.

As used herein, the term "polymer" includes, on the one hand, chemically homogeneous macromolecular aggregates prepared by polymerization reactions, but differing in degree of polymerization, molar mass and chain length. The term also includes, on the other hand, derivatives of such macromolecular aggregates formed by polymerization reactions, i.e. products which may be obtained by reactions, e.g. addition or substitution, of functional groups in the macromolecules and which may be chemically homogeneous or chemically inhomogeneous.

As used herein, the term "C₁₋₃" refers to a straight or branched hydrocarbon chain group consisting of only carbon and hydrogen atoms, which is a group without unsaturation, has from one to three carbon atoms, and is attached to the rest of a molecule by a single bond.

As used herein, the term "fluoro-substituted C₁₋₃" refers to a C₁₋₃ alkyl in which at least one hydrogen atom is substituted with a fluorine atom.

As used herein, the term "C₁₋₅ alkyl" refers to a straight or branched hydrocarbon chain group only consisting of carbon and hydrogen atoms,which is a group without unsaturation, has from one to five carbon atoms, and is attached to the reset of the molecule by a single bond.

As used herein, the term "substituted" means that at least one hydrogen atom of a compound or chemical part is replaced by a substituent of another chemical part, where the substituents are each independently selected from hydroxyl, mercapto, amino, cyano, nitro, aldehyde, a halogen atom, alkenyl, alkynyl, aryl, heteroaryl, C₁₋₆ alkyl, and C₁₋₆ alkoxy.

As used herein, the term "aryl" refers to an aromatic ring system in which at least one ring is an aromatic ring, including, but not limited to, phenyl, biphenyl, indenyl, 1-naphthyl, 2-naphthyl, and tetrahydronaphthyl.

As used herein, the term "process window" refers to a process interval that ensures product quality, including, but not limited to, a temperature interval, a pressure interval, a length of storage time, etc. It can be understood that the wider the process window, the lower the requirement for process precision.

In some embodiments, R₆ is an aryl-substituted C₁₋₅ alkyl, where the aryl is a substituted or unsubstituted aryl.

In some embodiments, the monomer represented by the formula I is selected from one or more of vinyl fluoride, vinylidene fluoride, tetrafluoroethylene, trifluorochloroethylene, and hexafluoropropylene.

In some embodiments, the monomer represented by the formula II is selected from one or more of 2-benzylacrylic acid, 2-(4-isobutylbenzyl)acrylic acid, 2-methylene-4-phenylbutyric acid, and 2-(1-phenylethyl)acrylic acid.

In some embodiments, the polymer contains one or more structural units derived from the monomer represented by the formula I. In some embodiments, the polymer contains one or more structural units derived from the monomer represented by the formula II. In some embodiments, the polymer includes, but is not limited to, a vinylidene fluoride-2-benzyl acrylic acid copolymer, a vinylidene fluoride-2-(4-isobutylbenzyl) acrylic acid copolymer, a vinylidene fluoride-2-methylene-4-phenylbutyric acid copolymer, a vinylidene fluoride-2-(1-phenylethyl) acrylic acid copolymer, a fluorinated vinyl-2-benzyl acrylic acid copolymer, a tetrafluoroethylene-2-benzyl acrylic acid copolymer, a tetrafluoroethylene-2-(4-isobutylbenzyl) acrylic acid copolymer, and a vinylidene fluoride-trifluorochloroethylene-2-benzyl acrylic acid copolymer.

A fluorine element in the structural unit derived from the monomer represented by the formula I and hydroxyl or/and carboxyl on the surface of a current collector can form hydrogen bonding, and the carboxyl contained in the structural unit derived from the monomer represented by the formula II and the hydroxyl or/and carboxyl on the surface of the current collector can also form hydrogen bonding, and both the hydrogen bonding makes the positive electrode plate have good adhesion force. The structural unit derived from the monomer represented by the formula II can effectively reduce fluorine content of the fluoropolymer and alleviate the gelling of the slurry due to the fluorine element. Moreover, the structural unit derived from the monomer represented by the formula II can further increase steric hindrance of the fluoropolymer, reduce aggregation of fluorine-containing blocks, reduce viscosity of the slurry, alleviate gelling of the slurry, and improve filterability of the slurry effectively. Moreover, the structural unit derived from the monomer represented by the formula II contains an aryl group having elements and structure similar to those of the conductive agent, which can interact with the conductive agent to improve stability and anti-settling property of the conductive slurry.

Compared with a conventional binder of polyvinylidene fluoride, the fluoropolymer of the present application can reduce viscosity of the conductive slurry, improve filterability of the conductive slurry, and prevent the slurry from gelling during storage,thus improving anti-gelling property and storage performance of the conductive slurry, broadening a process window of the conductive slurry greatly, improving processability of the conductive slurry, enabling the conductive slurry to meet production requirements without the need of adding a dispersant, and further reducing film resistance of the electrode plate and direct current impedance of the battery.

In some embodiments, R₁ in the formula I is fluorine, and R₂ and R₃ are each independently selected from one or more of hydrogen, fluorine, chlorine, and trifluoromethyl.

In some embodiments, the structural unit derived from the monomer represented by the formula I has a molar content of 50% to 70% based on the total mole number of all structural units in the fluoropolymer. In some embodiments, the molar content of the structural unit derived from the monomer represented by the formula I may be any one of 50%, 60% and 70% based on the total mole number of all structural units in the fluoropolymer.

By controlling the molar content of the structural unit derived from the monomer represented by the formula I within a suitable range, the conductive slurry has an appropriate viscosity, both the viscosity of the conductive slurry and the adhesion of the electrode plate can be taken into account, thus comprehensively improving the processing performance and use performance of the conductive slurry.

In some embodiments, the structural unit derived from the monomer represented by the formula II has a molar content of 30% to 50% based on the total mole number of all structural units in the fluoropolymer. In some embodiments, the molar content of the structural unit derived from the monomer represented by the formula II may be any one of 30%, 40% and 50% based on the total mole number of all structural units in the fluoropolymer.

By controlling the molar content of the structural unit derived from the monomer represented by the formula II within a suitable range, the conductive slurry has an appropriate viscosity, both the viscosity of the conductive slurry and the adhesion of the electrode plate can be taken into account, thus comprehensively improving the processing performance and use performance of the conductive slurry.

In some embodiments, the fluoropolymer has a weight average molecular weight of 100,000 to 140,000. In some embodiments, the weight average molecular weight of the fluoropolymer may be any one of 100,000, 110,000, 120,000, 130,000, 140,000.

As used herein, the term "weight average molecular weight" refers to the sum of weight fractions of molecules having different molecular weights used in the polymer and the product of molecular weights corresponding thereto.

In the present application, the weight average molecular weight of the polymer may be tested using methods known in the art, such as gel chromatography, e.g., using a Waters 2695 Isocratic HPLC type gel chromatograph (differential refractive index detector 2141). In some embodiments, the testing method includes: using a polystyrene solution specimen with a mass fraction of 3.0% as a reference, selecting a matched chromatographic column (oily: Styragel HT5DMF7.8 × 300 mm + Styragel HT4); and preparing a 3.0% fluoropolymer gel solution from a purified N-methylpyrrolidone (NMP) solvent and allowing the prepared solution to stand for one day. During testing, tetrahydrofuran is drawn in by a syringe first for rinsing, which is repeated several times. Then 5 ml of the test solution is drawn in, the air in the syringe is removed, and the needle tip is wiped dry. Finally, the sample solution is slowly injected into the injection port. After the reading display is stable, data is obtained and the weight average molecular weight is read.

By controlling the weight average molecular weight of the fluoropolymer within a suitable range, the slurry has an appropriate viscosity, which is conducive to the subsequent preparation of the positive electrode slurry; moreover, the fluoropolymer with an appropriate weight average molecular weight is conducive to forming a three-dimensional mesh bonding structure, so that the electrode plate has good adhesion force, both the viscosity of the conductive slurry and the adhesion of the electrode plate can be taken into account, thus comprehensively improving the processing performance and use performance of the conductive slurry.

In an embodiment of the present application, the present application provides a preparation method of a fluoropolymer, the preparation method including the following steps:
performing a polymerization reaction of at least one monomer represented by formula I with at least one monomer represented by formula II in polymerizable conditions, 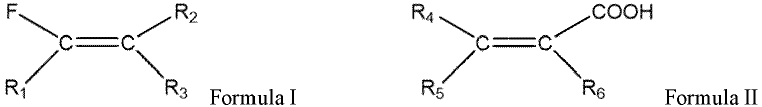
wherein R₁, R₂ and R₃ are each independently selected from one or more of hydrogen, fluorine, chlorine and fluorine-substituted C₁₋₃ alkyl; R₄ and R₅ are each independently selected from one or more of hydrogen, substituted or unsubstituted C₁₋₅ alkyl; and R₆ is selected from one or more of aryl-substituted C₁₋₅ alkyl, substituted or substituted aryl.

Compared with a conventional binder, the fluoropolymer prepared by the method can reduce viscosity of the conductive slurry, improve filterability of the conductive slurry, and prevent the slurry from gelling during storage, thus improving anti-gelling property and storage performance of the conductive slurry, broadening a process window of the conductive slurry greatly, improving processability of the conductive slurry, and enabling the conductive slurry to meet production requirements without the need of adding a dispersant.

In some embodiments, R₁ in the formula I is fluorine, and R₂ and R₃ are each independently selected from one or more of hydrogen, fluorine, chlorine, and trifluoromethyl.

In some embodiments, the structural unit represented by the formula I has a molar content of 50% to 70% based on the total mole number of the structural unit represented by the formula I and the structural unit represented by the formula II.

In some embodiments, the structural unit represented by the formula II has a molar content of 30% to 50% based on the total mole number of the structural unit represented by the formula I and the structural unit represented by the formula II.

In some embodiments, the polymerization reaction includes a first stage of polymerization and a second stage of polymerization,
the first stage of polymerization: adding an initiator, an emulsifier, at least one monomer represented by the formula I and an aqueous medium into a reaction vessel for the first stage of polymerization, and continuously feeding the monomer represented by the formula I in the first stage of polymerization; and
the second stage of polymerization: after reacting for a period of time, adding at least one monomer represented by the formula II into the reaction vessel for the second stage of polymerization, and continuously feeding the monomer represented by the formula I in the second stage of polymerization.

In the method of the present application, the monomer represented by the formula I is fed continuously first to form a fluorine-containing chain segment so that the fluoropolymer has high thermal stability; and then the monomer represented by the formula II is fed to reduce the contact between the fluorine-containing chain segment and the external environment, so that the gelling phenomenon caused by fluorine elements is alleviated effectively. Compared with a fluoropolymer prepared by a method of feeding all monomers into the reaction vessel to perform polymerization simultaneously, the fluoropolymer prepared by this method can effectively improve stability of the conductive slurry, improve anti-settling property of the slurry, improve adhesion of the electrode plate, reduce film resistance of the electrode plate and direct current internal resistance of the battery, and improve kinetic performance of the battery. In addition, when the monomer represented by the formula II is fed into the reaction vessel for the second stage of polymerization, the monomer represented by the formula I is continued to be fed into the reaction vessel, which is conducive to improving compatibility of the chain segment generated in the first stage of polymerization with the chain segment generated in the second stage of polymerization, thus improving stability of the fluoropolymer.

In some embodiments, the mass of the monomer represented by the formula I fed in the first stage of polymerization is 80% to 85% of the total mass of the monomer represented by the formula I fed in the polymerization reaction, and the mass of the monomer represented by the formula I fed in the second stage of polymerization is 15% to 20% of the total mass of the monomer represented by the formula I fed in the polymerization reaction.

In some embodiments, the initiator has a mass percentage of 0.5% to 1.4% based on the total mass of the monomer represented by the formula I and the monomer represented by the formula II.

In some embodiments, the emulsifier has a mass percentage of 0.1% to 0.4% based on the total mass of the monomer represented by the formula I and the monomer represented by the formula II.

In some embodiments, the aqueous medium provided in the first stage of polymerization has a mass percentage of 400% to 600% based on the total mass of the monomer represented by the formula I and the monomer represented by the formula II.

In some embodiments, both the first stage of polymerization and the second stage of polymerization have a reaction pressure of 6.0 MPa to 9.0 MPa and a reaction temperature of 80°C to 120°C.

In some embodiments, the emulsifier is an alkali metal salt of perfluorooctanoic acid.

In some embodiments, the initiator is one or both of N,N dimethylbenzylamine and N-methylamphetamine.

In an embodiment of the present application, there is provided an application of the fluoropolymer in any of embodiments in a secondary battery. Optionally, the secondary battery includes at least one of a lithium ion battery, a sodium ion battery, a magnesium ion battery, and a potassium ion battery.

### [Conductive slurry]

In an embodiment of the present application, there is provided a conductive slurry, containing a conductive agent, a solvent, and the fluoropolymer in any of embodiments.

In some embodiments, the solvent is an aqueous solvent, such as deionized water.

In some embodiments, the solvent is an oily solvent, and examples of the oily solvents include, but are not limited to, dimethylacetamide, N,N-dimethylformamide, N-methylpyrrolidone, acetone, dimethyl carbonate, ethyl cellulose, and polycarbonate.

Compared with the way of directly adding a conductive agent during preparation of a positive electrode slurry in the existing technology, the conductive slurry of the present application can improve dispersity of the conductive agent in the positive electrode slurry and improve the conductive effect of the conductive agent in the electrode plate, thereby effectively reducing content of the conductive agent in the electrode plate, further increasing load of the electrode plate and improving power performance of the battery. Moreover, the fluorinated polymer in the conductive slurry may play a role of a binder and a dispersant at the same time, and there is no need to add other dispersants to the conductive slurry, which is conducive to further increasing load of the active material in the electrode plate and the adhesion force of the electrode plate.

In some embodiments, the conductive agent has a mass fraction of 10.0% to 15.0% based on the total mass of the conductive slurry. In some embodiments, the mass fraction of the conductive agent may be any one of 10%, 11%, 12%, 13%, 14%, and 15%.

The mass fraction of the conductive agent is controlled within a suitable range, based on the total mass of the conductive slurry. The slurry has an appropriate viscosity, so that the electrode plate has good adhesion, and the processing performance and use performance of the slurry are improved comprehensively.

In some embodiments, the fluoropolymer has a mass fraction of 0.5% to 2.5% based on the total mass of the conductive slurry. In some embodiments, the mass fraction of the fluoropolymer may be any one of 0.5%, 1.0%, 1.5%, 2.0%, and 2.5%.

The mass fraction of the fluoropolymer is controlled within a suitable range, based on the total mass of the conductive slurry. The slurry has an appropriate viscosity, which is conducive to the subsequent preparation of the positive electrode slurry and enables the electrode plate to have good adhesion, so that the processing performance and use performance of the slurry are improved comprehensively.

In some embodiments, the conductive slurry has a solid content of 10.5% to 17.5% and a viscosity of 300 mPa·s to 900 mPa·s.

In some embodiments, the viscosity of the conductive slurry may be any one of 400 mPa·s to 900 mPa·s, 400 mPa·s to 800 mPa·s, 400 mPa·s to 750 mPa·s, 400 mPa·s to 600 mPa·s, 450 mPa·s to 800 mPa·s, 450 mPa·s to 750 mPa·s, 450 mPa·s to 650 mPa·s, and 500 mPa·s to 750 mPa·s.

With the solid content of 10.5% to 17.5% and the viscosity of 300 mPa·s to 900 mPa·s, the conductive slurry can be directly mixed and stirred with the active material and the binder to prepare the positive electrode slurry without adding other additives to the conductive slurry, which is conducive to improving production efficiency and reducing production cost.

### [Positive electrode plate]

In some embodiments of the present application, there is provided a positive electrode plate, comprising a positive electrode current collector and a positive electrode film layer provided on at least one surface of the positive electrode current collector, where the positive electrode film layer comprises a positive electrode active material, a conductive agent and a binder, and the conductive agent is a deposit of the conductive slurry of any of embodiments.

As used herein, the term "binder" refers to a chemical compound, polymer or mixture that forms a colloidal solution or colloidal dispersion in a dispersion medium.

Compared with a positive electrode plate prepared by directly adding conductive agent powder in the existing technology, the positive electrode plate disclosed in the present application has the advantages that the conductive agent therein exists in the form of a deposit of the conductive slurry in the positive electrode plate, so that the positive electrode plate may have low film resistance when a small amount of conductive agent is added, which provides a possibility of further increasing the load of the positive electrode active material in the electrode plate.

In some embodiments, the film resistance of the positive electrode plate is less than 0.2 Ω when the mass content of the conductive agent is 0.5% to 0.8% based on the total mass of the positive electrode film layer.

In some embodiments, the adhesion force per unit length between the positive electrode film layer and the positive electrode current collector is not less than 14 N/m.

As an example, the positive electrode current collector has two opposite surfaces in its own thickness direction, and the positive electrode film layer is arranged on either or both of the opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may include, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. For example, the conductive agent may include at least one of superconducting carbon, acetylene black, carbon black, Ketjen black, carbon dot, carbon nanotubes, graphene, and carbon nanofibers.

In some embodiments, the positive electrode plate can be prepared by mixing components for preparing the positive electrode plate, such as the fluoropolymer, the conductive agent and the solvent to obtain a conductive slurry, dispersing the active material, the conductive agent, the binder and any other components in the conductive slurry to form a positive electrode slurry; and coating the positive electrode current collector with the positive electrode slurry, followed by oven drying, cold pressing and other procedures, to obtain the positive electrode plate.

### [Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoro arsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator can be selected from at least one of glass fiber, nonwoven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft bag may be a plastic, and examples of the plastic may include polypropylene, polybutylene terephthalate, polybutylene succinate, and the like.

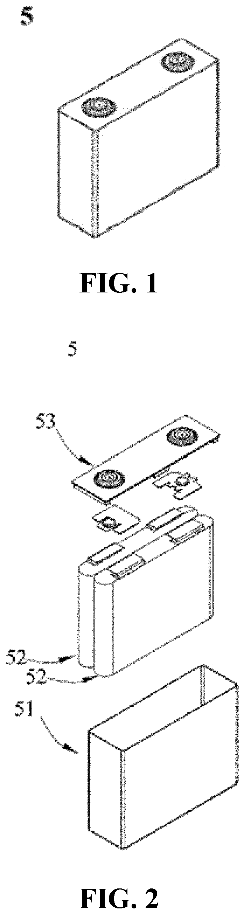

The shape of the secondary battery is not particularly limited in the present application, and may be a cylinder, a square, or any other shape. For example, Fig. 1 shows a secondary battery 5 with a square structure as an example.

In some embodiments, referring to Fig. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

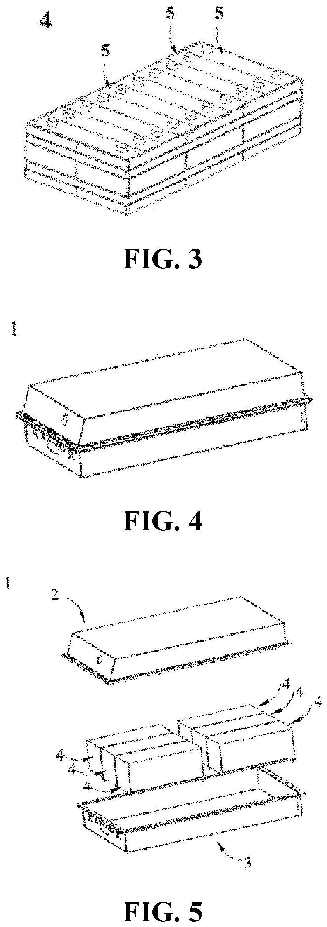

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

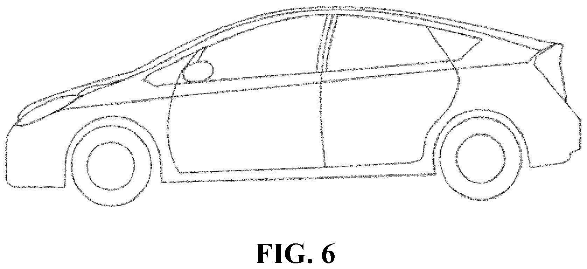

Figs. 4 and 5 show a battery pack 1 as an example. Referring to Fig. 5 and Fig. 6, the battery pack 1 may include a battery box and a plurality of battery modules 4 arranged in the battery box. The battery box includes an upper box body 2 and a lower box body 3. The upper box body 2 can cover the lower box body 3 to form enclosed space for accommodating the battery modules 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

### Examples

Embodiments of the present application will be described below. The embodiments described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

### Example 1

### 1) Preparation of fluoropolymer

22.6 kg of deionized water (with conductivity less than or equal to 2 µs/cm), 11.3 g of sodium perfluorooctanoate, and 40.7 g of N,N dimethylbenzylamine were added into a 50 L reaction kettle sequentially, and then the reaction kettle was closed.

The kettle was evacuated and filled with nitrogen, followed by repeating the operation until oxygen concentration in the reaction kettle was less than 100 ppm.

A vinylidene fluoride monomer was introduced into the reaction kettle until pressure in the kettle was 8.0 MPa.

The kettle was heated up to 100°C to start a reaction, and reaction pressure was kept constant by continuously introducing the vinylidene fluoride monomer into the kettle during the reaction process.

After 16.8 mol of vinylidene fluoride monomer was introduced into the reaction kettle, 20 mol of 2-benzyl acrylic acid was added into the reaction kettle, with the reaction pressure maintained at 8.0 MPa and the temperature at 100°C, the remaining 3.2 mol of vinylidene fluoride monomer was introduced into the reaction kettle, and the reaction was continued for 2 h.

When the reaction was completed, the pressure in the kettle was reduced to 0.2 MPa, and the unreacted vinylidene fluoride monomer was recovered;

Reaction products were coalesced, washed, separated, dried, and pulverized to obtain a vinylidene fluoride-2-benzyl acrylic acid copolymer.

### 2) Preparation of conductive slurry

17,600 g of N-methylpyrrolidone was added into a 35 L stirring tank.

200 g of vinylidene fluoride-2-benzyl acrylic acid copolymer was added to N-methyl pyrrolidone, where the stirring speed was set to 1,000 rpm and the stirring time was set to 60 minutes, and a primary slurry was obtained at the end of the stirring.

2,200 g of conductive carbon black powder was added to the primary slurry, where the stirring speed was set to 1,000 rpm and the stirring time was set to 60 minutes, a cooling water circulation was then started, and a conductive carbon black slurry was obtained at the end of the stirring.

### 3) Preparation of positive electrode plate

2,840 g of lithium iron phosphate material, 62.8 g of polyvinylidene fluoride, and 2,000g of conductive slurry were stirred and mixed well to obtain a positive electrode slurry; after that, the positive electrode slurry was uniformly applied on a positive electrode current collector, followed by oven drying, cold pressing and cutting to obtain a positive electrode plate.

### 4) Preparation of negative electrode plate

An active material, i.e., artificial graphite, a conductive agent, i.e., carbon black, a binder, i.e., styrenebutadiene rubber (SBR), and a thickener, i.e., sodium hydroxymethylcellulose (CMC) were dissolved in a solvent, i.e., deionized water at a weight ratio of 96.2:0.8:0.8:1.2, and then mixed uniformly to form a negative electrode slurry; the negative slurry was uniformly applied on the a copper foil of a negative electrode current collector once or more times, followed by oven drying, cold pressing, and cutting to obtain a negative electrode plate.

### 5) Separator

A polypropylene film was used as the separator.

### 6) Preparation of electrolyte solution

In a glove box in an argon atmosphere (H₂O<0.1 ppm, O₂<0.1 ppm), an organic solvent of ethylene carbonate (EC)/ethyl methyl carbonate (EMC) was mixed uniformly in a volume ratio of 3/7, lithium salt of LiPF₆ with a mass ratio of 12.5% was dissolved in the organic solvent and stirred uniformly to obtain an electrolyte solution of Example 1.

### 7) Preparation of battery

The positive electrode plate, the separator and the negative electrode plate in Example 1 were stacked in sequence, the separator was positioned between the positive electrode plate and the negative electrode plate and functioned to separate, and then a bare cell was obtained by winding, a tab was welded to the bare cell, the bare cell was mounted into an aluminum case, baked at 80°C to remove water, and then the electrolyte solution was injected and encapsulated to obtain an uncharged battery. The uncharged battery then went through processes such as standing, hot and cold pressing, formation, shaping and capacity testing successively to obtain a lithium-ion battery product of Example 1.

In Examples 2 to 5, the molar ratio of the respective monomers in the fluoropolymer is adjusted, and other parameters remain the same as in Example 1. The specific parameters are shown in Table 1and Table 2.

In Examples 6 to 9, the polymerization temperature for the preparation of the fluoropolymer and the mass of the initiator N,N dimethylbenzylamine were adjusted so that the fluoropolymer had different weight average molecular weights, and other parameters remain the same as in Example 1. The specific parameters are shown in Tables 1 and 2.

In Example 6, the polymerization reaction temperature was adjusted to 95° C., and the mass of N,N dimethylbenzylamine was adjusted to 51.3 g.

In Example 7, the mass of N,N dimethylbenzylamine was adjusted to 56.7 g.

In Example 8, the mass of N,N dimethylbenzylamine was adjusted to 59.4 g.

In Example 9, the polymerization reaction temperature was adjusted to 95°C, and the mass of N,N dimethylbenzylamine was adjusted to 48.6 g.

In Examples 10 to 13, the mass fraction of the fluoropolymer in the conductive slurry was adjusted, and other parameters remain the same as in Example 1. The specific parameters are shown in Tables 1 and 2.

In Examples 14 to 17, the mass fraction of the conductive agent in the under-coating conductive slurry was adjusted, and other parameters remain the same as in Example 1. The specific parameters are shown in Tables 1 and 2.

In Example 18, a 2-benzyl acrylic acid monomer was replaced by a 2-(4-isobutylbenzyl) acrylic acid monomer, and other parameters are the same as in Example 1. The specific parameters are shown in Tables 1 and 2.

In Example 19, the fluoropolymer was a vinylidene fluoride-2-benzyl acrylic acid copolymer prepared by conventional methods, and its synthesis method includes the following.

22.6 kg of deionized water (with conductivity less than or equal to 2 µs/cm), 11.3 g of sodium perfluorooctanoate, and 40.7 g of N,N dimethylbenzylamine were added into a 50 L reaction kettle sequentially, and then the reaction kettle was closed.

The kettle was evacuated and filled with nitrogen, followed by repeating the operation until oxygen concentration in the reaction kettle was less than 100 ppm.

20 mol of vinylidene fluoride monomer and 20 mol of 2-benzyl acrylic acid were added to the reaction kettle until pressure in the kettle was 8.0 MPa.

The kettle was heated up to 100°C to start a reaction, and reaction pressure was kept constant by continuously introducing the vinylidene fluoride monomer into the kettle during the reaction process.

The reaction was stopped when the pressure in the kettle dropped to 0.2 MPa.

Reaction products were coalesced, washed, separated, dried, and pulverized to obtain a vinylidene fluoride-2-benzyl acrylic acid copolymer. Other parameters are the same as in Example 1. The specific parameters are shown in Tables 1 and 2.

In Comparative Example 1, a vinylidene fluoride polymer was used as the fluoropolymer.

In Comparative Example 2, a 2-benzyl acrylic monomer was replaced with an acrylic monomer, and other parameters are the same as in Example 1. The specific parameters are shown in Tables 1 and 2.

Comparative Example 3 is substantially the same as Example 1, except that the conductive slurry containing the fluoropolymer was replaced with a conductive slurry containing a dispersant. The specific preparation method is as below:
17,600 g of N-methylpyrrolidone, 200 g of polyvinylpyrrolidone and 2,200 g of conductive carbon black powder were added to a 35 L stirring tank, where the stirring speed was set to 1,000 rpm and the stirring time was set to 60 minutes, a cooling water circulation was then started, and a conductive carbon black slurry was obtained at the end of the stirring.

Comparative Example 4 is substantially the same as Example 1, except that the conductive slurry was replaced with the conductive carbon black to directly prepare the positive electrode plate.

Comparative Example 5 is substantially the same as Comparative Example 4, except that the mass content of the conductive carbon black was adjusted to 2.0% based on the total mass of the positive electrode film layer.

### II. Testing method

### 1. Characterization of fluoropolymer

### (1) Testing of weight average molecular weight of fluoropolymer

A Waters 2695 Isocratic HPLC gel chromatograph (differential refraction index detector 2141) was used. A polystyrene solution specimen with a mass fraction of 3.0% was used as a reference, and a matched chromatographic column (oily: StyragelHT5DMF7.8 × 300 mm + Styragel HT4) was selected; and a 3.0% fluoropolymer solution was prepared from a purified N-methylpyrrolidone (NMP) solvent, followed by standing of the prepared solution for one day. During testing, tetrahydrofuran was drawn in by a syringe first for rinsing, which was repeated several times. Then 5 ml of the test solution was drawn in, the air in the syringe was removed, and the needle tip was wiped dry. Finally, the sample solution was slowly injected into the injection port. After the reading display was stable, data was obtained and the weight average molecular weight was read.

### 2. Property testing of conductive slurry

### (1) Viscosity testing for conductive slurry

A rotary viscometer was used to measure viscosity of an under-coating slurry. An appropriate rotor was selected for the viscometer and fixed, the under-coating slurry was placed under the viscometer rotor and just submerged rotor scale lines, where the instrument model is Shanghai Fangrui NDJ-5S, in case of 62 # rotor, the rotational speed is 30 rpm, the viscosity of the slurry can be measured is in a range of 0 to 1,000 mPa·s; in case of 63 # rotor, the rotational speed is 30 rpm, the viscosity of the slurry can be measured is in a range of 0 to 2,000 mPa·s, the testing temperature is 25°C, and the testing time is 5 minutes, and finally data was read after reading display was stable.

### (2) Filterability testing for conductive slurry

A 500 ml beaker was placed at the lower end of a 200-mesh filter screen support, 500 ml of conductive slurry was taken and put in the filter screen, the time when the volume of the slurry in the beaker reached 300 ml was record and used for determining filterability of the slurry, where if filtration time is less than 120 s, it indicates that the slurry has good filterability, which is denoted as "Y"; if the filtration time of the slurry is greater than 120 s or the slurry can not pass through the filter screen, it indicates that the filterability of the slurry is poor, which is denoted as "N".

### (3) Solid content of conductive slurry and difference between solid contents of the upper and lower layers after standing for 24 hours

A copper foil was weighed by a weight-loss meter, with its weight value denoted as M0 and then cleared it to zero.

A small amount of conductive slurry was applied on the copper foil, then put into a moisture meter for weighing, with its weight value denoted as M1.

Drying was started after the device was closed.

After drying, the weighing data was recorded and denoted as M2, followed by calculating the solid content to obtain the solid content of (M2-M0)/(M1-M0).

The solid contents of the upper and lower layers of the conductive slurry were measured in the same way after standing for 24 hours, and the solid content of the lower layer of the conductive slurry subtracted the solid content of the upper layer of conductive slurry to obtain the difference between the solid contents of the upper and lower layers after the conductive slurry was subjected to standing for 24 hours.

### (4). Gelling state testing for conductive slurry after standing for 60 days

A steel ruler was used to pick up the slurry in the beaker, followed by determining whether the slurry was gelled or not according to the slurry flowing state. If the slurry is not gelled, it is denoted as "OK", if the slurry is gelled, it is denoted as "NG".

With gel: the slurry is lumpy or fails to flow naturally and continuously.

Without gel: the slurry flows naturally and continuously, and the slurry flows evenly on the surface of the steel ruler without lumps.

### 3. Electrode plate performance testing

### (1) Adhesion force of electrode plate

With reference to the GB-T2790-1995 national standard "Adhesive 180 ° peel strength testing method", the adhesion force testing process in the examples and comparative examples of the present application is as follows: a specimen with a width of 30 mm and a length of 100-160 mm was cut by means of a blade, and a special double-sided tape with a width of 20 mm and a length of 90-150 mm was adhered on a steel plate. A positive electrode film layer of the electrode plate specimen cut out earlier was attached on the double-sided adhesive tape, and then rolled three times in the same direction with a 2 kg of press roll. A paper tape with the same width as the electrode plate and a length of 250 mm was fixed on the electrode plate current collector, and fixed with a furrow tape. A power supply of a Sansi tensile machine (sensitivity, 1N) was turned on, with an indicator light turned on, a position-limiting block was adjusted to an appropriate position, and the end of a steel plate that was not attached with the electrode plate was fixed with a lower clamp. The paper tape was folded upward and fixed with an upper clamp. The position of the upper clamp was adjusted using the "up" and "down" buttons on a manual controller provided on the tensile machine. Then testing was carried out, followed by value reading. The stretching speed was 50 mm/min. A force on the electrode plate in force balance was divided by the width of the adhesive tape to be used as the adhesion force of the electrode plate per unit length so as to characterize the adhesive strength between the positive electrode film layer and the current collector.

### (2) Film resistance of electrode plate

The dried electrode plate was cut at the left, center and right, and cut into small discs each of a diameter of 10 mm. The small discs were placed at an appropriate position of a "probe" of an electrode plate resistance measuring instrument produced by Yuanneng Technology after the power supply of the electrode plate resistance measuring instrument was turned on, followed by pushing a "start" button and reading the value after the reading display was stable. Each small disc has two tested positions , and finally, the average value of six measurements was calculated as the film resistance of the electrode plate.

### 4. Battery performance testing

### (1) Battery direct-current impedance testing

At 25°C, the secondary battery was charged to 4.2 V with a constant current at a rate of 1/3C, and then charged to a current of 0.05C with a constant voltage of 4.2 V, followed by standing for 5 min. Then the battery was discharged at a rate of 1/3C for 90 min, an electrode assembly was adjusted to 50% SOC, followed by standing for 60 min, and then the battery was discharged at a rate of 4C for 30 s, and finally, the discharge DCR at 50% SOC was obtained based on testing data.

### III. Analysis of testing results of examples and comparative examples

Fluoropolymers, conductive slurries, positive electrode plates and secondary batteries of the respective examples and comparative examples were prepared by the methods described above, and the respective parameters were measured. The results are shown in Tables 1 and 2 below.

**Table 1 Preparation parameters and results of examples and comparative examples**

| No. | Fluoropolymer | Monomer represented by Formula I | | Monomer represented by Formula II | | Weight average molecul ar weight (10,000) | Conductive slurry | | |
|---|---|---|---|---|---|---|---|---|---|
| | | Name | Molar content | Name | Mola r conte nt | | Mass fraction of fluoropoly mer | Mass fraction of conductiy e agent | Solid conte nt |
| Example 1 | Vinylidene fluoride-2-benzyl acrylic acid copolymer | Vinylide ne fluoride | 50% | 2-benzyl acrylic acid | 50% | 12 | 1% | 11% | 12% |
| Example 2 | Vinylidene fluoride-2-benzyl acrylic acid copolymer | Vinylide ne fluoride | 70% | 2-benzyl acrylic acid | 30% | 12 | 1% | 11% | 12% |
| Example 3 | Vinylidene fluoride-2-benzyl acrylic acid copolymer | Vinylide ne fluoride | 60% | 2-benzyl acrylic acid | 40% | 12 | 1% | 11% | 12% |
| Example 4 | Vinylidene fluoride-2-benzyl acrylic acid copolymer | Vinylide ne fluoride | 35% | 2-benzyl acrylic acid | 65% | 12 | 1% | 11% | 12% |
| Example 5 | Vinylidene fluoride-2-benzyl acrylic acid copolymer | Vinylide ne fluoride | 85% | 2-benzyl acrylic acid | 15% | 12 | 1% | 11% | 12% |
| Example 6 | Vinylidene fluoride-2-benzyl acrylic acid copolymer | Vinylide ne fluoride | 50% | 2-benzyl acrylic acid | 50% | 14 | 1% | 11% | 12% |
| Example 7 | Vinylidene fluoride-2-benzyl acrylic acid copolymer | Vinylide ne fluoride | 50% | 2-benzyl acrylic acid | 50% | 10 | 1% | 11% | 12% |
| Example 8 | Vinylidene fluoride-2-benzyl acrylic acid copolymer | Vinylide ne fluoride | 50% | 2-benzyl acrylic acid | 50% | 8 | 1% | 11% | 12% |
| Example 9 | Vinylidene fluoride-2-benzyl acrylic acid copolymer | Vinylide ne fluoride | 50% | 2-benzyl acrylic acid | 50% | 18 | 1% | 11% | 12% |
| Example 10 | Vinylidene fluoride-2-benzyl acrylic acid copolymer | Vinylide ne fluoride | 50% | 2-benzyl acrylic acid | 50% | 12 | 0.5% | 11% | 11.5 % |
| Example 11 | Vinylidene fluoride-2-benzyl acrylic acid copolymer | Vinylide ne fluoride | 50% | 2-benzyl acrylic acid | 50% | 12 | 2.5% | 11% | 13.5 % |
| Example 12 | Vinylidene fluoride-2-benzyl acrylic acid copolymer | Vinylide ne fluoride | 50% | 2-benzyl acrylic acid | 50% | 12 | 0.2% | 11% | 11.2 % |
| Example 13 | Vinylidene fluoride-2-benzyl acrylic acid copolymer | Vinylide ne fluoride | 50% | 2-benzyl acrylic acid | 50% | 12 | 3.0% | 11% | 14% |
| Example 14 | Vinylidene fluoride-2-benzyl acrylic acid copolymer | Vinylide ne fluoride | 50% | 2-benzyl acrylic acid | 50% | 12 | 1% | 10% | 11% |
| Example 15 | Vinylidene fluoride-2-benzyl acrylic acid copolymer | Vinylide ne fluoride | 50% | 2-benzyl acrylic acid | 50% | 12 | 1% | 15% | 16% |
| Example 16 | Vinylidene fluoride-2-benzyl acrylic acid copolymer | Vinylide ne fluoride | 50% | 2-benzyl acrylic acid | 50% | 12 | 1% | 5% | 6% |
| Example 17 | Vinylidene fluoride-2-benzyl acrylic acid copolymer | Vinylide ne fluoride | 50% | 2-benzyl acrylic acid | 50% | 12 | 1% | 20% | 21% |
| Example 18 | Vinylidene fluoride-(4-isobutylbenzyl) acrylic acid copolymer | Vinylide ne fluoride | 50% | 2-(4-isobutylben zyl) acrylic acid | 50% | 12 | 1% | 11% | 12% |
| Example 19 | Vinylidene fluoride-2-benzyl acrylic acid copolymer prepared by conventional methods | Vinylide ne fluoride | 50% | 2-benzyl acrylic acid | 50% | 12 | 1% | 11% | 12% |
| Comparati ve example 1 | Vinylidene fluoride polymer | Vinylide ne fluoride | 100% | / | / | 12 | 1% | 11% | 12% |
| Comparati ve example 2 | Vinylidene fluoride-acrylic acid polymer | Vinylide ne fluoride | 50% | Acrylic acid | 50% | 12 | 1% | 11% | 12% |
| Comparati ve example 3 | Conductive slurry prepared by conventional methods (containing polyvinylpyrroli done) | / | / | / | / | / | / | 11% | 12% |
| Comparati ve example 4 | Positive electrode plate prepared by conventional methods (using conductive carbon black) | / | / | / | / | / | / | / | / |
| Comparati ve example 5 | Positive electrode plate prepared by conventional methods (using conductive carbon black) | / | / | / | / | / | / | / | / |

**Table 2 Preparation parameters and results of examples and comparative examples**

| No. | Fluoropolymer | Conductive slurry | | | | Electrode plate | | | Battery |
|---|---|---|---|---|---|---|---|---|---|
| | | Viscos ity /mPa.s | Filterabi lity | Difference between solid contents of the upper and lower layers after standing for 24 hours | Gelatio n state after 60 days of storage | Mass content of conducti ve agent | Adhesi on force (N/m) | Film resista nce /Ω | DCR /mΩ |
| Example 1 | Vinylidene fluoride-2-benzyl acrylic acid copolymer | 600 | Y | <1.0% | OK | 0.7% | 15 | 0.15 | 0.3 |
| Example 2 | Vinylidene fluoride-2-benzyl acrylic acid copolymer | 700 | Y | <1.0% | OK | 0.7% | 15.2 | 0.15 | 0.3 |
| Example 3 | Vinylidene fluoride-2-benzyl acrylic acid copolymer | 650 | Y | <1.0% | OK | 0.7% | 15.1 | 0.15 | 0.3 |
| Example 4 | Vinylidene fluoride-2-benzyl acrylic acid copolymer | 450 | Y | <1.0% | OK | 0.7% | 14.2 | 0.15 | 0.3 |
| Example 5 | Vinylidene fluoride-2-benzyl acrylic acid copolymer | 850 | Y | <1.0% | OK | 0.7% | 15.4 | 0.15 | 0.3 |
| Example 6 | Vinylidene fluoride-2-benzyl acrylic acid copolymer | 750 | Y | <1.0% | OK | 0.7% | 15.3 | 0.15 | 0.3 |
| Example 7 | Vinylidene fluoride-2-benzyl acrylic acid copolymer | 500 | Y | <1.0% | OK | 0.7% | 14.8 | 0.15 | 0.3 |
| Example 8 | Vinylidene fluoride-2-benzyl acrylic acid copolymer | 450 | Y | <1.0% | OK | 0.7% | 14.2 | 0.15 | 0.3 |
| Example 9 | Vinylidene fluoride-2-benzyl acrylic acid copolymer | 900 | Y | <1.0% | OK | 0.7% | 15.5 | 0.15 | 0.3 |
| Example 10 | Vinylidene fluoride-2-benzyl acrylic acid copolymer | 400 | Y | <1.0% | OK | 0.7% | 14.1 | 0.15 | 0.3 |
| Example 11 | Vinylidene fluoride-2-benzyl acrylic acid copolymer | 750 | Y | <1.0% | OK | 0.7% | 15.3 | 0.15 | 0.3 |
| Example 12 | Vinylidene fluoride-2-benzyl acrylic acid copolymer | 300 | Y | <1.0% | OK | 0.7% | 14 | 0.15 | 0.3 |
| Example 13 | Vinylidene fluoride-2-benzyl acrylic acid copolymer | 800 | Y | <1.0% | OK | 0.7% | 15.3 | *0.15* | 0.3 |
| Example 14 | Vinylidene fluoride-2-benzyl acrylic acid copolymer | 550 | Y | <1.0% | OK | 0.7% | 0 | 0.15 | 0.3 |
| Example 15 | Vinylidene fluoride-2-benzyl acrylic acid copolymer | 750 | Y | <1.0% | OK | 0.7% | 14.8 | 0.15 | 0.3 |
| Example 16 | Vinylidene fluoride-2-benzyl acrylic acid copolymer | *350* | Y | <1.0% | OK | 0.7% | 15.4 | *0.15* | 0.3 |
| Example 17 | Vinylidene fluoride-2-benzyl acrylic acid copolymer | 850 | Y | <1.0% | OK | 0.7% | 14.2 | 0.15 | 0.3 |
| Example 18 | Vinylidene fluoride-(4-isobutylbenzyl) acrylic acid copolymer | 500 | Y | <1.0% | OK | 0.7% | 14.3 | 0.15 | 0.3 |
| Example 19 | Vinylidene fluoride-2-benzyl acrylic acid copolymer prepared by conventional methods | 350 | Y | 3.00% | OK | 0.7% | 11.2 | 0.28 | 0.44 |
| Comparat ive example 1 | Vinylidene fluoride polymer | 1100 | N | <1.0% | NG | 0.7% | 16 | 0.3 | 0.45 |
| Comparat ive example 2 | Vinylidene fluoride-acrylic acid polymer | 200 | Y | 6.00% | OK | 0.7% | 12.6 | 0.3 | 0.46 |
| Comparat ive example 3 | Conductive slurry prepared by conventional methods (containing polyvinylpyrroli done) | 1500 | N | <1.0% | NG | 0.7% | 10.3 | 0.45 | 0.52 |
| Comparat ive example 4 | Positive electrode plate prepared by conventional methods (using conductive carbon black) | / | / | / | / | 0.7% | 13.1 | *0.55* | 0.6 |
| Comparat ive example 5 | Positive electrode plate prepared by conventional methods (using conductive carbon black) | / | | / | / | 2.0% | 12 | 0.12 | 0.25 |

As can be seen from Table 1, a fluoropolymer is disclosed in Examples 1 to 19, and the fluoropolymer contains a structural unit derived from vinylidene fluoride and a structural unit derived from 2-benzyl acrylic acid or 2-(4-isobutylbenzyl)acrylic acid.

As can be seen from the comparison of Examples 1 to 5 and Example 19 with Comparative Example 1, compared with the conventional polyvinylidene fluoride, the fluoropolymer of the present application can reduce viscosity of the conductive slurry, improve filterability of the conductive slurry, make the conductive slurry less susceptible to gelling during storage, and improve anti-gelling property and storage performance of the conductive slurry. Due to the improved dispersion performance of the conductive slurry, film resistance of the electrode plate and direct-current impedance of the battery are further reduced. As can be seen from the comparison of Example 1 with Comparative Example 2, compared with the vinylidene fluoride-acrylic acid copolymer, the vinylidene fluoride-2-benzyl acrylic acid copolymer disclosed in the present application can improve anti-settling property of the conductive slurry, and improve the adhesion of the electrode plate.

As can be seen from the comparison of Examples 1 to 3 with Examples 4 and 5, the mass content of the structural unit derived from vinylidene fluoride is 50% to 70% based on the mass of the fluoropolymer, so that both the viscosity of the conductive slurry and the adhesion of the electrode plate can be taken into account, thus comprehensively improving the processing performance and use performance of the conductive slurry.

As can be seen from the comparison of Examples 1 to 3 with Examples 4 and 5, the mass content of the structural unit derived from 2-benzyl acrylic acid is 30% to 50% based on the mass of the fluoropolymer, so that both the viscosity of the conductive slurry and the adhesion of the electrode plate can be taken into account, thus comprehensively improving the processing performance and use performance of the conductive slurry.

As can be seen from the comparison of Example 1, and Examples 6 to 7 with Examples 8 and 9, the fluoropolymer has a heavy average molecular weight of 100,000 to 140,000, so that both the viscosity of the conductive slurry and the adhesion of the electrode plate can be taken into account, thus comprehensively improving the processing performance and use performance of the conductive slurry.

As can be seen from the comparison of Example 1 with Example 19, compared with the vinylidene difluoride-2-benzyl acrylic acid copolymer prepared by conventional methods, the vinylidene difluoride-2-benzyl acrylic acid copolymer disclosed in the present application can improve anti-settling property of the conductive slurry, improve the adhesion of the electrode plate, reduce film resistance of the electrode plate and direct-current internal resistance of the battery, and improve kinetic performance of the battery.

The conductive slurries in Examples 1 to 19 all contain conductive carbon black, N-methylpyrrolidone and a vinylidene fluoride-2-benzyl acrylic acid copolymer or a vinylidene fluoride-2-(4-isobutylbenzyl) acrylic acid copolymer.

As can be seen from the comparison of Examples 1 to 19 with Comparative Example 3, compared with the conductive slurry, containing a dispersant, prepared by conventional methods, the fluoropolymer disclosed in the present application can reduce viscosity of the conductive slurry to facilitate the subsequent coating process, can improve filterability of the conductive slurry, significantly alleviate gelling of the conductive slurry during the storage process, and improve anti-gelling property and storage performance of the conductive slurry, and besides, it can also improve the adhesion of the electrode plate, reduce film resistance of the electrode plate, and reduce direct-current internal resistance of the battery, thus improving kinetic performance of the battery.

As can be seen from the comparison of with Example 1, and Examples 10 and 11 with Examples 12 and 13, the mass fraction of the fluoropolymer is 0.5% to 2.5% based on the total mass of the conductive slurry. The slurry has an appropriate viscosity, so that the electrode plate has good adhesion, and the processing performance and use performance of the slurry are improved comprehensively.

As can be seen from the comparison of Example 1, and Examples 14 to 15 with Examples 16 and 17, the conductive agent has a mass fraction of 10.0% to 15.0% based on the total mass of the conductive slurry. The slurry has an appropriate viscosity, so that the electrode plate has good adhesion, and the processing performance and use performance of the slurry are improved comprehensively.

As can be seen in Examples 1 to 15 and Example 18, the conductive slurry has a solid content of 10.5% to 17.5% and a viscosity of 300 mPa·s to 900 mPa·s. It is not necessary to add a dispersant or thickener to the conductive slurry prepared from the fluoropolymer to improve processability, which helps to increase productivity and optimize the production process.

The positive electrode plates in Examples 1 to 19 each comprises a positive electrode current collector and a positive electrode film layer provided on at least one surface of the positive electrode current collector, where the positive electrode film layer comprises a positive electrode active material, a conductive agent and a binder, and the conductive agent is a deposit of the conductive slurry.

As can be seen from the comparison of Examples 1 to 18 with Comparative Example 4, compared with the positive electrode plate prepared by the way of directly adding conductive agent powder that is commonly used in the prior art, the positive electrode plate of the present application comprises a conductive agent in the form of a deposit of the conductive slurry, which is conducive to improving the adhesion of the positive electrode plate, reducing film resistance of the electrode plate and direct-current internal resistance of the battery, and improving kinetic performance of the battery.

As can be seen from the comparison of Examples 1 to 19 with Comparative Example 5, compared with the positive electrode plate prepared by the way of directly adding conductive agent powder that is commonly used in the prior art, the positive electrode plate of the present disclosure comprises a conductive agent in the form of a deposit of the conductive slurry, which can effectively reduce content of the conductive agent that needs to be added into the positive electrode plate, and is conducive to increasing energy density of the battery.

As can be seen in Examples 1 to 18, the film resistance of the positive electrode plate is less than 0.2 Ω when the mass content of the conductive agent is 0.5% to 0.8% based on the total mass of the positive electrode film layer.

As can be seen in Examples 1 to 18, the adhesion force per unit length between the positive electrode film layer and the positive electrode current collector is not less than 14 N/m, and the positive electrode plate can meet actual usage requirements.

It should be noted that the present application is not limited to the embodiments above. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A fluoropolymer, comprising a structural unit derived from a monomer represented by formula I and a structural unit derived from a monomer represented by formula II, 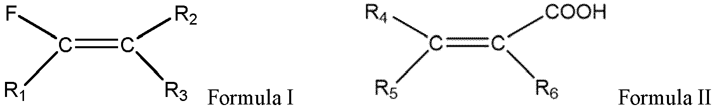 wherein R₁, R₂ and R₃ are each independently selected from one or more of hydrogen, fluorine, chlorine and fluorine-substituted C₁₋₃ alkyl; R₄ and R₅ are each independently selected from one or more of hydrogen, substituted or unsubstituted C₁₋₅ alkyl; and R₆ is selected from one or more of aryl-substituted C₁₋₅ alkyl, substituted or substituted aryl.

2. The fluoropolymer of claim 1, wherein R₁ in the formula I is fluorine, and R₂ and R₃ are each independently selected from one or more of hydrogen, fluorine, chlorine and trifluoromethyl.

3. The fluoropolymer of claim 1 or 2, wherein the structural unit derived from the monomer represented by the formula I has a molar content of 50% to 70% based on the total mole number of all structural units in the fluoropolymer.

4. The fluoropolymer of any one of claims 1 to 3, wherein the structural unit derived from the monomer represented by the formula II has a molar content of 30% to 50% based on the total mole number of all structural units in the fluoropolymer.

5. The fluoropolymer of any one of claims 1 to 4, wherein the fluoropolymer has a weight average molecular weight of 100,000 to 140,000.

6. The fluoropolymer of claim 1, wherein the monomer represented by the formula I is selected from one or more of vinyl fluoride, vinylidene fluoride, tetrafluoroethylene, trifluoro chloroethylene, and hexafluoropropylene.

7. The fluoropolymer of any one of claims 1 to 6, wherein the monomer represented by the formula II is selected from one or more of 2-benzylacrylic acid, 2-(4-isobutylbenzyl)acrylic acid, 2-methylene-4-phenylbutyric acid, and 2-(1-phenylethyl)acrylic acid.

8. A preparation method of a fluoropolymer, comprising the following steps:
performing a polymerization reaction of at least one monomer represented by formula I with at least one monomer represented by formula II in polymerizable conditions, 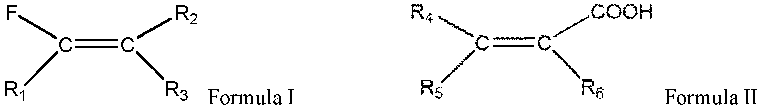
wherein R₁, R₂ and R₃ are each independently selected from one or more of hydrogen, fluorine, chlorine and fluorine-substituted C₁₋₃ alkyl; R₄ and R₅ are each independently selected from one or more of hydrogen, substituted or unsubstituted C₁₋₅ alkyl; and R₆ is selected from one or more of aryl-substituted C₁₋₅ alkyl, substituted or substituted aryl.

9. The preparation method of claim 8, wherein R₁ in the formula I is fluorine, and R₂ and R₃ are each independently selected from one or more of hydrogen, fluorine, chlorine and trifluoromethyl.

10. The preparation method of claim 8 or 9, wherein the structural unit represented by the formula I has a molar content of 50% to 70% based on the total mole number of the structural unit represented by the formula I and the structural unit represented by the formula II.

11. The preparation method of any one of claims 8 to 10, wherein the structural unit represented by the formula II has a molar content of 30% to 50% based on the total mole number of the structural unit represented by the formula I and the structural unit represented by the formula II.

12. The preparation method of any one of claims 8 to 11, wherein the polymerization reaction includes a first stage of polymerization and a second stage of polymerization,
the first stage of polymerization: adding an initiator, an emulsifier, at least one monomer represented by the formula I and an aqueous medium into a reaction vessel for the first stage of polymerization, and continuously feeding the monomer represented by the formula I in the first stage of polymerization; and
the second stage of polymerization: after reacting for a period of time, adding at least one monomer represented by the formula II into the reaction vessel for the second stage of polymerization, and continuously feeding the monomer represented by the formula I in the second stage of polymerization.

13. The preparation method of claim 12, wherein the mass of the monomer represented by the formula I fed in the first stage of polymerization is 80% to 85% of the total mass of the monomer represented by the formula I fed in the polymerization reaction, and the mass of the monomer represented by the formula I fed in the second stage of polymerization is 15% to 20% of the total mass of the monomer represented by the formula I fed in the polymerization reaction.

14. The preparation method of claim 12 or 13, wherein the initiator has a mass percentage of 0.5% to 1.4% based on the total mass of the monomer represented by the formula I and the monomer represented by the formula II.

15. The preparation method of any one of claims 12 to 14, wherein the emulsifier has a mass percentage of 0.1% to 0.4% based on the total mass of the monomer represented by the formula I and the monomer represented by the formula II.

16. The preparation method of any one of claims 12 to 15, wherein the aqueous medium provided in the first stage of polymerization has a mass percentage of 400% to 600% based on the total mass of the monomer represented by the formula I and the monomer represented by the formula II.

17. The preparation method of any one of claims 12 to 16, wherein both the first stage of polymerization and the second stage of polymerization have a reaction pressure of 6.0 MPa to 9.0 MPa and a reaction temperature of 80°C to 120°C.

18. The preparation method of any one of claims 12 to 17, wherein the emulsifier is an alkali metal salt of perfluorooctanoic acid.

19. The preparation method of any one of claims 12 to 18, wherein the initiator is one or both of N,N dimethylbenzylamine and N-methylamphetamine.

20. Application of the fluoropolymer of any one of claims 1 to 7 in a secondary battery.

21. A conductive slurry, comprising a conductive agent, a solvent and the fluoropolymer of any one of claims 1 to 7.

22. The conductive slurry of claim 21, wherein the conductive agent has a mass fraction of 10.0% to 15.0% based on the total mass of the conductive slurry.

23. The conductive slurry of claim 21 or 22, wherein the fluoropolymer has a mass percentage of 0.5% to 2.5% based on the total mass of the conductive slurry.

24. The conductive slurry of any one of claims 21 to 23, wherein the conductive slurry has a solid content of 10.5% to 17.5% and a viscosity of 300*mPa·s* to 900*mPa·s.*

25. A positive electrode plate, comprising a positive electrode current collector and a positive electrode film layer provided on at least one surface of the positive electrode current collector, wherein the positive electrode film layer comprises a positive electrode active material, a conductive agent and a binder, and the conductive agent is a deposit of the conductive slurry of any one of claims 21 to 24.

26. The positive electrode plate of claim 25, wherein the film resistance of the positive electrode plate is less than 0.2 Ω when the mass content of the conductive agent is 0.5% to 0.8% based on the total mass of the positive electrode film layer.

27. The positive electrode plate of claim 25 or 26, wherein the adhesion force per unit length between the positive electrode film layer and the positive electrode current collector is not less than 14 N/m.

28. A secondary battery, comprising a negative electrode plate, a separator, an electrolyte solution, and the positive electrode plate of any one of claims 25 to 27.

29. The secondary battery of claim 28, wherein the secondary battery includes at least one of a lithium ion battery, a sodium ion battery, a magnesium ion battery, and a potassium ion battery.

30. A battery module, comprising the secondary battery of claim 28 or 29.

31. A battery pack, comprising at least one of the secondary battery of claim 28 or 29 and the battery module of claim 30.

32. An electrical apparatus, comprising at least one of the secondary battery of claim 28 or 29, the battery module of claim 30 or the battery pack of claim 31.
